# FASCICULE DE BREVET EUROPEEN

(11) **EP 3 995 348 B1**
(45) Date de publication et mention de la délivrance du brevet: **03.01.2024**
(21) Numéro de dépôt: 21206956.1
(22) Date de dépôt: 08.11.2021
(51) Int. Cl.: B60L 5/36, E01C 9/06, B60M 7/00, B60L 53/14, B60L 5/38, B60M 1/30, E01C 9/00, B60M 1/36

(54) **SUPPORT DE DISPOSITIF D'ALIMENTATION ÉLECTRIQUE PAR LE SOL ET CHAUSSÉE ROUTIÈRE COMPRENANT UN TEL DISPOSITIF**
HALTERUNG FÜR EINE VORRICHTUNG ZUR STROMVERSORGUNG ÜBER DEN BODEN UND STRASSENOBERFLÄCHE MIT EINER SOLCHEN VORRICHTUNG
DEVICE SUPPORT FOR SUPPLYING ELECTRIC POWER VIA THE GROUND AND ROADWAY COMPRISING SUCH A DEVICE

(30) Priorité: 09.11.2020 FR 2011471
(43) Date de publication de la demande: 11.05.2022
(73) Titulaire: ALSTOM Holdings, 93400 Saint-Ouen-sur-Seine (FR)
(72) Inventeur: DUPRAT, Patrick, 93340 Le Raincy (FR)
(74) Mandataire: Lavoix

(56) Documents cités:
- EP-A1- 2 907 690
- EP-B1- 1 579 074
- FR-A1- 2 852 031
- FR-A1- 3 065 405
- FR-B1- 2 852 031
- US-A- 4 139 071

## Description

La présente invention concerne un support d'au moins un segment de conducteur électrique d'un dispositif d'alimentation électrique par le sol pour un véhicule terrestre, d'au moins un segment de conducteur électrique d'un dispositif d'alimentation électrique par le sol pour un véhicule terrestre, ledit support présentant la forme d'une bande électriquement isolante s'étendant selon une direction longitudinale, ledit support comprenant : une surface supérieure sensiblement plane, au moins une gorge ménagée dans ladite surface supérieure et s'étendant dans la direction longitudinale, l'au moins une gorge étant destinée à recevoir le au moins un segment de conducteur électrique ; et une surface de solidarisation à une chaussée routière, sensiblement opposée à la surface supérieure.

L'invention s'applique particulièrement aux chaussées routières destinées à la circulation de véhicules terrestres non guidés, tels que des automobiles. Par « non guidés », on entend que les véhicules terrestres ne sont pas contraints de suivre des voies spécifiques telles que des voies ferrées.

Un tel support, notamment décrit dans le document FR3065405, est formé d'un matériau élastomère qui assure l'isolation électrique du ou des segments de conducteur électrique. Le support est destiné à faire partie d'un dispositif d'alimentation électrique inséré dans une chaussée routière. Ladite chaussée est classiquement revêtue d'un enrobé routier. Le document US4139071A divulgue également un tel support. De plus les documents FR2852031A1 et EP1579074B1 divulguent l'utilisation de matériaux granuleux incorporés dans des liants composant la chaussée pour améliorer l'adhérence des véhicules utilisant cette chaussée.

Le ou les segments de conducteur électrique forment avec le support, une piste d'alimentation électrique apte à alimenter en électricité des véhicules électriques se déplaçant sur ladite chaussée.

Des véhicules, électriques ou non, sont susceptibles de croiser le dispositif d'alimentation électrique en circulant sur la chaussée. La différence de coefficient de friction entre l'enrobé routier et le dispositif d'alimentation électrique, notamment le support, est de nature à entraîner des dérapages lorsque les véhicules se déplacent à vitesse élevée.

Il est connu de ménager des stries ou des reliefs à la surface du support en élastomère, afin de diminuer cette différence de coefficient de friction. Une telle solution est efficace par temps sec. Cependant, en cas de pluie, l'effet lubrifiant de l'eau abaisse de manière trop importante le coefficient de friction du support.

La présente invention a pour but de fournir une solution simple à réaliser, diminuant les risques de dérapage des véhicules traversant le dispositif d'alimentation électrique par le sol.

A cet effet, l'invention a pour objet un support du type précité, comportant : un corps formé d'un matériau élastomère ; et une couche d'un matériau granuleux, incorporé au matériau élastomère au niveau de la surface supérieure du support, de sorte à conférer une rugosité à ladite surface supérieure.

Suivant d'autres aspects avantageux de l'invention, le support comporte l'une ou plusieurs des caractéristiques suivantes, prises isolément ou suivant toutes les combinaisons techniquement possibles :
- le matériau granuleux est formé de particules, de préférence de granulats, présentant une dureté supérieure à celle du matériau élastomère du corps ;
- le matériau granuleux est un granulat minéral, notamment de type pierreux ;
- le matériau granuleux est formé de particules, une dimension maximale de chaque particule étant comprise entre 1 mm et 10 mm, plus préférentiellement entre 2 mm et 6 mm ;
- le support comprend en outre une ou plusieurs tubulures s'étendant dans la direction longitudinale à l'intérieur du corps.

L'invention se rapporte en outre à un segment de piste d'alimentation électrique d'un dispositif d'alimentation par le sol pour un véhicule terrestre, le segment de piste d'alimentation comportant : un support d'au moins un segment de conducteur électrique tel que décrit ci-dessus ; et au moins un segment de conducteur électrique inséré dans l'au moins une gorge.

Avantageusement, le segment de piste est tel que le support comprend trois gorges ménagées dans la surface supérieure, chaque gorge s'étendant dans la direction longitudinale, un segment de conducteur électrique, notamment un rail électriquement conducteur, étant inséré dans chacune desdites trois gorges.

L'invention se rapporte en outre à une chaussée routière comprenant un dispositif d'alimentation électrique par le sol pour un véhicule terrestre, ladite chaussée comprenant : une surface de roulement ; une tranchée longitudinale ménagée dans ladite surface de roulement et une piste d'alimentation électrique insérée dans ladite tranchée longitudinale, ladite piste étant formée d'une série de segments de piste tels que décrit ci-dessus, disposés adjacents les uns aux autres dans la direction longitudinale, les segments de piste étant configurés de sorte que la surface supérieure de chaque support affleure sensiblement la surface de roulement de la chaussée. Par « affleure sensiblement », on entend qu'une éventuelle différence de hauteur entre la surface supérieure de chaque support et la surface de roulement de la chaussée est inférieure à 5 cm et préférentiellement de l'ordre de quelques millimètres.

Avantageusement, la chaussée routière est telle que la surface de roulement présente un premier coefficient de frottement ; et la surface supérieure du support de chaque segment de piste présente un deuxième coefficient de frottement proche du premier coefficient de frottement, de préférence compris entre 75% et 125% du premier coefficient de frottement.

Avantageusement, la chaussée routière est telle que les segments de conducteur électrique insérés dans les trois gorges de chaque support forment respectivement un conducteur électrique de phase, un conducteur électrique de retour de courant et un conducteur électrique de neutre formant une barrière de potentiel, lesdits conducteurs électriques étant sensiblement parallèles les uns aux autres.

L'invention sera mieux comprise à la lecture de la description qui va suivre, donnée uniquement à titre d'exemple non limitatif et faite en se référant au dessin sur lequel :

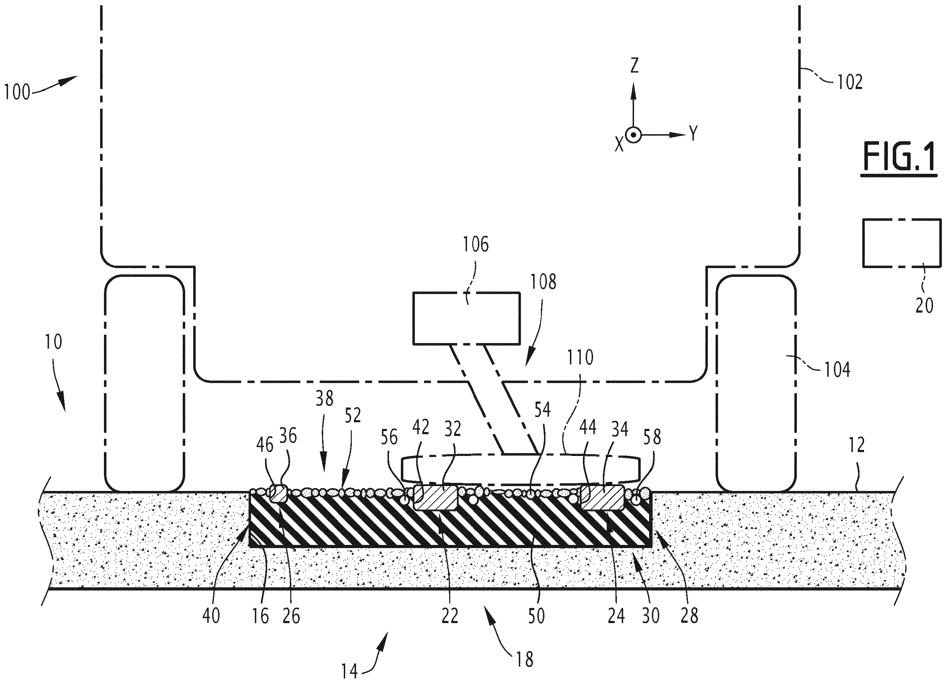

[Fig 1] la figure 1 est une vue schématique partielle, en coupe, d'une chaussée routière équipée d'un dispositif d'alimentation électrique par le sol selon un mode de réalisation de l'invention.

La figure 1 représente une chaussée routière 10 selon un mode de réalisation de l'invention. La chaussée routière 10 est destinée à être parcourue par des véhicules terrestres, tels qu'une voiture 100 partiellement représentée en pointillés.

Comme il sera décrit ci-après, la chaussée routière 10 est spécialement destinée à être parcourue par des véhicules électriques non guidés, tels que la voiture 100, et à alimenter lesdits véhicules en énergie électrique.

La chaussée routière 10 comporte une surface 12 de roulement et un dispositif 14 d'alimentation électrique par le sol, notamment pour la voiture 100.

On considère une base orthonormée (X, Y, Z) associée à la chaussée routière 10, la direction Z représentant la verticale.

La surface 12 de roulement est sensiblement orientée vers le haut par rapport à Z. La surface 12 est de forme variable, selon la situation géographique de la chaussée routière 10. Dans la suite de la description, on considère pour simplifier que la surface 12 de roulement est sensiblement disposée dans un plan horizontal (X, Y).

La surface 12 de roulement est par exemple formée d'un enrobé routier, composé notamment de granulats et d'un liant.

Le dispositif 14 d'alimentation électrique comporte une tranchée 16, une piste 18 d'alimentation électrique du véhicule 100 et un organe 20 d'alimentation électrique.

La tranchée 16 ouvre sur la surface 12 de roulement et s'étend selon une direction horizontale dite direction longitudinale. Sur la figure 1, la direction longitudinale correspond à la direction X.

De préférence, la tranchée 16 présente une section sensiblement constante selon la direction longitudinale. Dans le mode de réalisation représenté, la tranchée 16 présente une section sensiblement rectangulaire, les plus grands côtés étant de préférence horizontaux. Sur la figure 1, les côtés dudit rectangle s'étendent selon les directions Y et Z.

La piste 18 d'alimentation électrique est disposée dans la tranchée 16, comme il sera décrit ci-après. La piste 18 d'alimentation comporte notamment au moins un conducteur électrique propre à l'alimentation du véhicule électrique circulant sur la chaussée. En particulier, dans le mode de réalisation représenté, la piste 18 comporte un conducteur 22 de phase, c'est-à-dire d'alimentation, un conducteur 24 de retour de courant et un conducteur 26 de neutre, faisant office de barrière de potentiel. Lesdits conducteurs 22, 24, 26 sont par exemples des rails et sont sensiblement parallèles les uns aux autres et s'étendent dans la direction longitudinale. De préférence, les conducteurs 24 de retour de courant et 26 de neutre sont agencées de part et d'autre du conducteur 22 de phase.

Les conducteurs 22 de phase/d'alimentation, 24 de retour de courant et 26 de neutre sont reliés à l'organe 20 d'alimentation électrique.

La piste 18 comprend avantageusement une pluralité de segments 28 associés en série les uns aux autres et formant la piste d'alimentation électrique. Plus précisément, les segments sont disposés adjacents les uns aux autres dans la direction longitudinale. Un seul segment 28 est visible en coupe sur la figure 1. Dans la suite de la description, on considère que les segments 28 formant la piste d'alimentation électrique 18 sont sensiblement identiques.

Chaque segment 28 comporte un support 30 et au moins un segment 32, 34, 36 de conducteur électrique. Dans le mode de réalisation représenté, chaque segment 28 de piste d'alimentation électrique comporte : un segment 32 de conducteur 22 de phase; un segment 34 de conducteur 24 de retour de courant ; et un segment 36 de conducteur 26 de neutre. Les segments de conducteur de phase, de retour de courant et de neutre d'un même segment 28 sont installés adjacents les uns aux autres dans la direction transversale, et forment, avec le support 30, un segment 28 de la piste d'alimentation correspondante.

Le support 30 présente la forme d'une bande de section sensiblement rectangulaire, s'étendant selon une direction longitudinale. Le support 30 est décrit ci-après dans la base orthonormée (X, Y, Z).

Plus précisément, le support 30 comporte une surface supérieure 38, sensiblement plane, et une surface 40 de solidarisation. La surface supérieure 38 forme le côté supérieur du rectangle de section du support. La surface 40 de solidarisation forme les trois autres côtés dudit rectangle.

La surface 40 de solidarisation a une forme sensiblement complémentaire de la tranchée 16 du dispositif 14 d'alimentation électrique. A titre d'exemple, le support 30 présente une longueur d'environ 3 m selon X ; une largeur entre 40 cm et 50 cm selon Y ; et une épaisseur entre 5 cm et 10 cm selon Z.

Le support 30 comporte en outre au moins une gorge 42, 44, 46 ouvrant sur la surface supérieure 38 et s'étendant dans la direction longitudinale. Dans le mode de réalisation représenté, le support 30 comporte trois gorges 42, 44, 46 parallèles, chacune desdites gorges recevant un segment 32, 34, 36 de conducteur correspondant.

Chaque segment 32, 34, 36 de conducteur affleure sensiblement la surface supérieure 38 du support 30, ou est légèrement en relief par rapport à ladite surface supérieure. En d'autres termes, comme il sera décrit par la suite, le segment 28 est configuré de sorte qu'un patin 110 situé au-dessus dudit segment puisse entrer en contact avec chaque segment 32, 34 de conducteur. Cependant, le relief des segment 32, 34, 36 de conducteur est limité par rapport à la surface supérieure 38 du support 30, afin de ne pas former d'obstacles sur la chaussée. De préférence, un relief selon Z des segment 32, 34, 36 de conducteur par rapport à la surface supérieure 38 est inférieur à 2 cm, plus préférentiellement inférieur à 1 cm.

Chaque segment 32, 34, 36 de conducteur est fixé à la gorge 42, 44, 46 correspondant, par exemple par vissage.

Le support 30 comporte : un corps 50 formé d'un matériau élastomère ; et une couche 52 d'un matériau granuleux, ladite couche 52 étant solidaire du corps 50.

Le corps 50 est de préférence moulé d'une pièce. De préférence, le matériau élastomère est un caoutchouc, tel que l'éthylène-propylène-diène monomère connu sous l'acronyme EPDM. En variante, il s'agit de caoutchouc naturel.

La couche 52 de matériau granuleux est incorporé au matériau élastomère au niveau de la surface supérieure 38 du support 30.

Plus précisément, la couche 52 est formée d'un ensemble de particules 54. De préférence, les particules 54 présentent une dureté supérieure à celle du matériau élastomère du corps 50.

De préférence, une dimension maximale de chaque particule 54, notamment le diamètre maximal de chaque particule, est comprise entre 1 mm et 10 mm, plus préférentiellement entre 2 mm et 6 mm.

De préférence, le matériau granuleux est un granulat minéral, notamment de type pierreux. En d'autres termes, les particules 54 sont des particules minérales, c'est-à-dire des granulats issues de roches. Ce type de matériau granuleux est également utilisé dans les enrobés routiers.

Selon une variante, les particules 54 sont des particules organiques, par exemple issues du recyclage de pneumatiques.

Les particules 54 sont partiellement insérées dans le matériau élastomère du corps 50, de sorte à former, conjointement avec ce matériau élastomère, la surface supérieure 38 du support 30. Ladite surface supérieure 38 présente ainsi un aspect irrégulier et une rugosité, notamment comparables à ceux d'un enrobé routier.

L'insertion partielle des particules 54 dans le matériau élastomère est par exemple réalisée lors du moulage du corps 50, en tapissant le fond du moule d'une couche de particules 54 avant d'injecter de l'élastomère dans ledit moule.

De manière optionnelle, le support 30 comporte en outre une ou plusieurs tubulures 56, 58 ménagées dans le corps 50, parallèlement aux gorges 42, 46, 48. Selon une première variante, la piste d'alimentation électrique 18 comporte une antenne radio de réception et/ou d'émission, reçue dans les ou dans certaines tubulures 56 des segments 28 de piste d'alimentation électrique. Selon une deuxième variante, la piste d'alimentation électrique 18 comporte des résistances électriques de chauffage afin d'éviter la formation de gel. Lesdites résistances sont reçues dans les ou dans certaines tubulures 58 des segments 28 de piste d'alimentation électrique et reliées à l'organe 20 d'alimentation électrique.

Chaque segment 28 de piste d'alimentation électrique 18 est disposé dans la tranchée 16, de sorte que la surface supérieure 38 de chaque support 30 affleure sensiblement la surface 12 de roulement de la chaussée routière 10. La surface 40 de solidarisation de chaque support 30 est fixée aux parois de la tranchée 16, par exemple au moyen d'une colle bitumineuse.

La voiture 100, circulant sur la chaussée routière 10, comporte une caisse 102 et des roues 104. La voiture 100 comporte des moyens de direction (non représentés) permettant à un conducteur de modifier l'angle des roues dans le plan XY de manière à diriger le véhicule 100.

A titre d'illustration, dans le mode de réalisation représenté, la voiture 100 est configurée pour coopérer avec le dispositif 14 d'alimentation électrique. Plus précisément, la voiture 100 comporte : un moteur électrique (non représenté) ; une batterie 106 rechargeable ; et un dispositif 108 de captation permettant de collecter du courant en interagissant avec la piste d'alimentation électrique au cours du déplacement de la voiture 100.

Le dispositif 108 de captation comporte un patin 110. Durant le déplacement de la voiture 100, le patin 110 est propre à être mis en contact glissant sur le rail conducteur 22 d'alimentation électrique et sur le rail conducteur 24 de retour de courant du dispositif 14.

Eventuellement, la voiture 100 est équipée d'un dispositif de communication par radio avec le dispositif 14 d'alimentation électrique, via l'antenne reçue dans les tubulures 56.

Un fonctionnement de la chaussée routière 10 va maintenant être décrit.

Lorsque la voiture 100 se déplace au-dessus de la piste d'alimentation électrique 18, comme sur la figure 1, ou encore à distance de ladite piste d'alimentation électrique 18, les roues 104 sont en contact avec la surface 12 de roulement. En revanche, lorsque la trajectoire de la voiture 100 coupe la piste d'alimentation électrique 18, les roues 104 entrent en contact avec les conducteurs électriques 22, 24, 26 et avec la surface supérieure 38 du support 30 d'un segment 28 de piste d'alimentation électrique.

La présence de la couche 52 granuleuse en surface supérieure 38 du support 30 confère audit support un coefficient de friction proche de celui de la surface 12 de roulement. De préférence, la surface supérieure 38 du support présente un coefficient de frottement transversal (CFT) supérieur à 0.

Par ailleurs, en cas de pluie, les irrégularités de surface formées par les particules 54 et notamment les granulats ont une action drainante, empêchant la formation d'un film d'eau au-dessus de la surface supérieure 38 du support 30.

Une telle configuration de la surface supérieure 38 du support 30 diminue les risques de dérapage pour une voiture 100 traversant la piste d'alimentation électrique 18 à une vitesse élevée. Cette diminution des risques est particulièrement notable en cas de pluie. De préférence, la profondeur moyenne de texture (PMT) de la couche 52 devra être supérieure à 1.

En parallèle, le matériau élastomère du corps 50 confère au support 30 des propriétés d'isolation électrique des conducteurs 22, 24, 26.

## Revendications

1. Support (30) d'au moins un segment de conducteur électrique d'un dispositif (14) d'alimentation électrique par le sol pour un véhicule terrestre (100), ledit support présentant la forme d'une bande électriquement isolante s'étendant selon une direction longitudinale (X), ledit support comprenant :
- une surface supérieure (38) sensiblement plane,
- au moins une gorge (42, 44, 46) ménagée dans ladite surface supérieure et s'étendant dans la direction longitudinale, l'au moins une gorge étant destinée à recevoir le au moins un segment de conducteur électrique ; et
- une surface (40) de solidarisation à une chaussée routière (10), sensiblement opposée à la surface supérieure,
le support comportant un corps (50) formé d'un matériau élastomère, et étant **caractérisé en ce qu'**il comporte une couche (52) d'un matériau granuleux, incorporé au matériau élastomère au niveau de la surface supérieure (38) du support, de sorte à conférer une rugosité à ladite surface supérieure,
le matériau granuleux étant formé de particules (54) présentant une dureté supérieure à celle du matériau élastomère du corps (50).

2. Support (30) selon la revendication 1, dans lequel le matériau granuleux est formé de granulats.

3. Support selon la revendication 1 ou la revendication 2, dans lequel le matériau granuleux est un granulat minéral, notamment de type pierreux.

4. Support selon l'une des revendications précédentes, dans lequel une dimension maximale de chaque particule du matériau granuleux est comprise entre 1 mm et 10 mm, plus préférentiellement entre 2 mm et 6 mm.

5. Support selon l'une des revendications précédentes, comprenant en outre une ou plusieurs tubulures (56, 58) s'étendant dans la direction longitudinale à l'intérieur du corps (50).

6. Segment de piste d'alimentation électrique d'un dispositif d'alimentation par le sol pour un véhicule terrestre, le segment de piste d'alimentation comportant : un support (30) d'au moins un segment de conducteur électrique selon l'une des revendications précédentes ; et au moins un segment de conducteur électrique inséré dans l'au moins une gorge (42, 44, 46).

7. Segment de piste d'alimentation électrique selon la revendication 6, dans lequel le support comprend trois gorges (42, 44, 46) ménagées dans la surface supérieure, chaque gorge s'étendant dans la direction longitudinale, un segment de conducteur électrique (32, 34, 36), notamment un rail électriquement conducteur, étant inséré dans chacune desdites trois gorges.

8. Chaussée routière (10) comprenant un dispositif (14) d'alimentation électrique par le sol pour un véhicule terrestre, ladite chaussée comprenant : une surface de roulement (12) ; une tranchée longitudinale (16) ménagée dans ladite surface de roulement et une piste (18) d'alimentation électrique insérée dans ladite tranchée longitudinale, ladite piste étant formée d'une série de segments (28) de piste selon l'une des revendications 6 ou 7, disposés adjacents les uns aux autres dans la direction longitudinale, les segments de piste étant configurés de sorte que la surface supérieure (38) de chaque support affleure sensiblement la surface de roulement (12) de la chaussée.

9. Chaussée routière selon la revendication 8, dans laquelle la surface de roulement (12) présente un premier coefficient de frottement ; et la surface supérieure (38) du support de chaque segment de piste présente un deuxième coefficient de frottement proche du premier coefficient de frottement, de préférence compris entre 75% et 125% du premier coefficient de frottement.

10. Chaussée routière selon la revendication 8 ou 9 prise en combinaison avec la revendication 7, dans laquelle les segments (32, 34, 36) de conducteur électrique insérés dans les trois gorges (42, 44, 46) de chaque support forment respectivement un conducteur électrique de phase (22), un conducteur électrique de retour de courant (24) et un conducteur électrique de neutre formant une barrière de potentiel (26), lesdits conducteurs électriques étant sensiblement parallèles les uns aux autres.

## Patentansprüche

1. Träger (30) mindestens eines elektrischen Leitersegments einer Bodenstromversorgungseinrichtung (14) für ein Landfahrzeug (100), wobei der Träger die Form eines elektrisch isolierenden Streifens aufweist, der sich in einer Längsrichtung (X) erstreckt, der Träger umfassend:
- eine im Wesentlichen ebene obere Fläche (38),
- mindestens eine Nut (42, 44, 46), die in der oberen Fläche ausgebildet ist und sich in Längsrichtung erstreckt, wobei die mindestens eine Nut dazu dient, das mindestens eine elektrische Leitersegment aufzunehmen; und
- eine Fläche (40) zur festen Verbindung mit einer Straßenfahrbahn (10) im Wesentlichen gegenüber der oberen Fläche,
der Träger umfassend einen Körper (50), der aus einem elastomeren Material gebildet ist, und **dadurch gekennzeichnet, dass** er eine Schicht (52) aus einem körnigen Material umfasst, das an der oberen Oberfläche (38) des Trägers in das elastomere Material integriert ist, um der oberen Fläche Rauigkeit zu verleihen,
wobei das körnige Material aus Partikeln (54) gebildet ist, die eine größere Härte als das elastomere Material des Körpers (50) aufweisen.

2. Träger (30) nach Anspruch 1, wobei das körnige Material aus Granulaten gebildet ist.

3. Träger nach Anspruch 1 oder Anspruch 2, wobei das körnige Material ein mineralisches Granulat ist, insbesondere vom Typ Stein.

4. Träger nach einem der vorherigen Ansprüche, wobei eine maximale Abmessung von jedem Partikel des körnigen Materials zwischen 1 mm und 10 mm, bevorzugter zwischen 2 mm und 6 mm, liegt.

5. Träger nach einem der vorherigen Ansprüche, ferner umfassend einen oder mehrere Stutzen (56, 58), die sich in Längsrichtung innerhalb des Körpers (50) erstrecken.

6. Elektrisches Stromversorgungsspursegment einer Bodenstromversorgungsvorrichtung für ein Landfahrzeug, das Versorgungsspursegment umfassend: einen Träger (30) für mindestens ein elektrisches Leitersegment nach einem der vorherigen Ansprüche; und mindestens ein elektrisches Leitersegment, das in die mindestens eine Nut (42, 44, 46) eingesetzt ist.

7. Elektrisches Stromversorgungsspursegment nach Anspruch 6, wobei der Träger drei Nuten (42, 44, 46) umfasst, die in der oberen Fläche ausgebildet sind, wobei sich jede Nut in Längsrichtung erstreckt, wobei in jede der drei Nuten ein elektrisches Leitersegment (32, 34, 36), insbesondere eine elektrisch leitende Schiene, eingesetzt ist.

8. Straßenfahrbahn (10), umfassend eine Bodenstromversorgungsvorrichtung (14) für ein Landfahrzeug, die Fahrbahn umfassend: eine Lauffläche (12); einen Längsgraben (16), der in der Lauffläche ausgebildet ist, und eine Stromversorgungsspur (18), die in den Längsgraben eingefügt ist, wobei die Spur aus einer Reihe von Spursegmenten (28) nach einem der Ansprüche 6 oder 7 gebildet ist, die in Längsrichtung nebeneinander angeordnet sind, wobei die Spursegmente konfiguriert sind, sodass die obere Fläche (38) von jedem Träger im Wesentlichen bündig mit der Lauffläche (12) der Fahrbahn ist.

9. Straßenfahrbahn nach Anspruch 8, wobei die Lauffläche (12) einen ersten Reibungskoeffizienten aufweist; und die obere Fläche (38) des Trägers von jedem Spursegment einen zweiten Reibungskoeffizienten aufweist, der nahe dem ersten Reibungskoeffizienten ist, vorzugsweise zwischen 75 % und 125 % des ersten Reibungskoeffizienten.

10. Straßenfahrbahn nach Anspruch 8 oder 9 in Verbindung mit Anspruch 7, wobei die Segmente (32, 34, 36) des elektrischen Leiters, die in die drei Nuten (42, 44, 46) von jedem Träger eingefügt sind, jeweils einen elektrischen Phasenleiter (22), einen elektrischen Stromrückleiter (24) und einen elektrischen Neutralleiter, der eine Potentialbarriere (26) bildet, bilden, wobei die elektrischen Leiter im Wesentlichen parallel zueinander sind.

## Claims

1. A support (30) for at least one segment of an electrical conductor of a ground power supply device (14) for a ground vehicle (100), said support being in the form of an electrically insulating strip extending in a longitudinal direction (X), said support comprising:
- a substantially flat top surface (38),
- at least one groove (42, 44, 46) formed in said upper surface and extending in the longitudinal direction, the at least one groove being intended to receive the at least one segment of electrical conductor; and
- a surface (40) for attachment to a road (10), substantially opposite the upper surface,
the support comprising a body (50) formed from an elastomeric material, and being **characterised in that** it comprises a layer (52) of a granular material, incorporated into the elastomeric material at the level of the upper surface (38) of the support, so as to impart a roughness to the said upper surface,
the granular material being formed of particles (54) having a hardness greater than that of the elastomer material of the body (50).

2. A support (30) according to claim 1, in which the granular material is formed from aggregates.

3. A support according to claim 1 or claim 2, in which the granular material is a mineral aggregate, in particular of the stony type.

4. A support according to one of the preceding claims, wherein a maximum dimension of each particle of the granular material is between 1 mm and 10 mm, more preferably between 2 mm and 6 mm.

5. A support according to one of the preceding claims, further comprising one or more tubes (56, 58) extending in the longitudinal direction inside the body (50).

6. An electrical supply track segment of a ground power supply device for a land vehicle, the supply track segment comprising: a support (30) for at least one segment of electrical conductor according to one of the preceding claims; and at least one segment of electrical conductor inserted into the at least one groove (42, 44, 46).

7. An electrical supply track segment according to claim 6, wherein the support comprises three grooves (42, 44, 46) formed in the upper surface, each groove extending in the longitudinal direction, an electrical conductor segment (32, 34, 36), in particular an electrically conductive rail, being inserted into each of said three grooves.

8. A road (10) comprising a ground power supply device (14) for a land vehicle, said road comprising: a running surface (12); a longitudinal trench (16) formed in said running surface and an electrical supply track (18) inserted in said longitudinal trench, said track being formed of a series of track segments according to one of claims of track segments (28) according to one of claims 6 or 7, arranged adjacent to one another in the longitudinal direction, the track segments being configured so that the upper surface (38) of each support is substantially flush with the running surface (12) of the road.

9. A road according to claim 8, in which the running surface (12) has a first coefficient of friction; and the upper surface (38) of the support of each track segment has a second coefficient of friction close to the first coefficient of friction, preferably between 75% and 125% of the first coefficient of friction.

10. A road according to claim 8 or 9 taken in combination with claim 7, in which the segments (32, 34, 36) of electrical conductor inserted in the three grooves (42, 44, 46) of each support respectively form a phase electrical conductor (22), a current return electrical conductor (24) and a neutral electrical conductor forming a potential barrier (26), said electrical conductors being substantially parallel to one another.
